# DEMANDE DE BREVET EUROPEEN

(11) **EP 0 653 856 A1**
(43) Date de publication de la demande: **17.05.1995**
(21) Numéro de dépôt: 94402605.3
(22) Date de dépôt: 16.11.1994
(51) Int. Cl.: H04B 17/00, H04L 12/26, B60R 16/02

(54) **Procédé et dispositif d'évaluation de la qualité d'un réseau de communication embarqué sur un véhicule automobile**

(30) Priorité: 16.11.1993 FR 9313646
(71) Demandeur: REGIE NATIONALE DES USINES RENAULT S.A., F-92109 Boulogne Billancourt (FR)
(72) Inventeur: Lenoir, Dominique, 92370 Chaville (FR)

(57) **Abrégé**

L'invention concerne un procédé et un dispositif d'évaluation de la qualité d'un réseau de communication embarqué sur un véhicule automobile, comportant plusieurs modules électroniques reliés par un bus de communication et émettant chacun des signaux sous forme de trames, caractérisé en ce qu'il consiste à:
- mesurer les temps de transition δTₘ entre les états binaires bas (0) et haut (1) d'une part, et δT_{d} entre les états binaires haut (1) et bas (0) d'autre part, sur chaque trame du signal circulant sur le bus, pour une différence de tension δV=V₂-V₁ constante, représentative de cette transition entre les états binaires et fixée par les caractéristiques du bus, ladite mesure étant effectuée sur un ou plusieurs bits particuliers situés en dehors de la zone d'arbitrage de la trame qui est de plus identifiée;
- rechercher le temps de transition maximum et à le comparer à une valeur maximale prédéfinie δT_{MAX} pour une configuration donnée du véhicule.

## Description

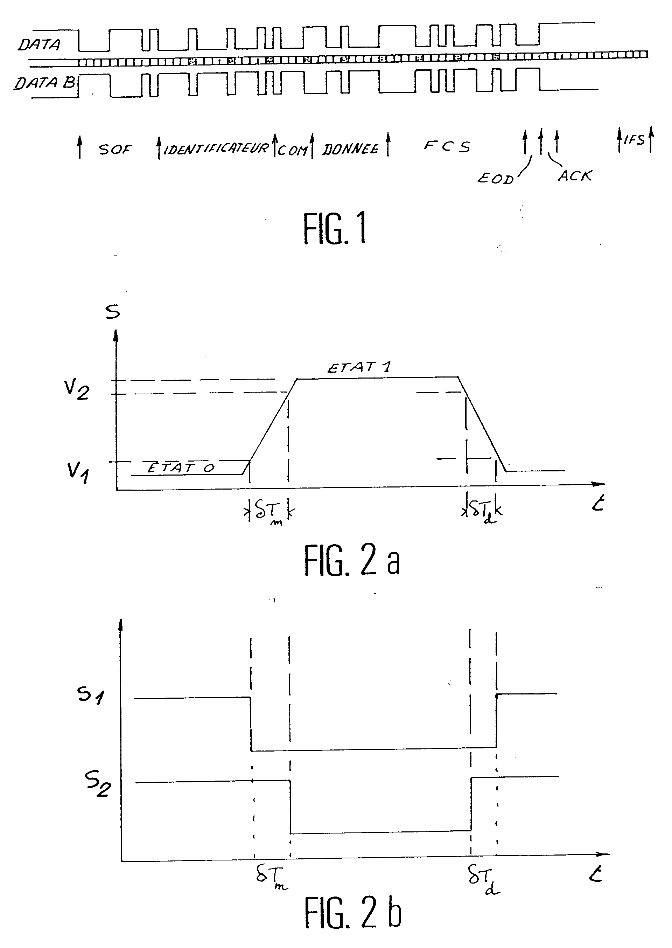

L'invention concerne un procédé d'évaluation de la qualité d'un réseau de communication embarqué sur un véhicule automobile, et le dispositif de mise en oeuvre de ce procédé. L'évaluation de la qualité d'un réseau de communication nécessite des moyens de détermination d'une dérive des caractéristiques de l'ensemble des éléments constituant le réseau, dérive occasionnant des dysfonctionnements partiels. L'invention s'applique à des réseaux automobiles répondant à différents protocoles, tels que VAN, CAN, J 1850, ABUS, ISO 9141... Un réseau de communication embarqué sur un véhicule automobile est constitué d'un ensemble de modules électroniques interconnectés par des moyens de câblage mono ou bifilaires. Ces modules ou abonnés sont des entités physiques capables de recevoir et/ou d'émettre des informations multidirectionnelles, codées sous une forme binaire de façon séquentielle et circulant sur le médium ou bus de communication que réalise le câblage. Tous les modules ont des fonctions communes de communication avec le bus multiplexé, selon le protocole VAN par exemple, et des fonctions spécifiques correspondant à une application particulière. Chaque module est équipé d'une interface électronique spécifique et standardisée du réseau pour assurer la compatibilité entre les informations binaires échangées. Certains modules plus évolués que les autres sont des unités centrales électroniques. Le nombre de modules sur un réseau est limité par des données technologiques de l'interface de ligne, afin d'assurer une bonne reconnaissance entre les niveaux récessif et dominant sur le bus multiplexé. Le transfert d'informations sur le réseau s'effectue par paquet indivisible appelé trame, qui est obtenue par transformation de ces informations réalisée par un contrôleur de protocole et qui est véhiculée selon un principe de transmission asynchrone. Chaque trame contient différents champs consécutifs, comme le montre la figure 1 dans le cas d'un réseau de type VAN, CAN ou J1850 :
- un champ de début de trame;
- un champ d'identification, définissant la nature des données et l'adresse des stations concernées;
- un champ de commande de l'opération à exécuter;
- un champ de données;
- un champ de vérification d'erreur FCS (Frame Check Sequence);
- un champ de fin de trame.

Le médium de communication reliant les modules est une ligne monofilaire ou bifilaire. Dans ce dernier cas, elle est constituée de deux conducteurs data et dataB: pour les réseaux de type VAN et CAN, le conducteur data transporte un signal en phase par rapport au signal logique issu du contrôleur de protocole et le conducteur dataB transporte un signal en opposition de phase par rapport à ce signal logique.

Actuellement, il n'existe pas de moyen de diagnostic d'une dérive des caractéristiques dans un réseau de communication, ayant pour conséquence des dysfonctionnements partiels comme une trame erronée ou une difficulté de communication. Le principal problème à résoudre provient du test qui doit inclure l'ensemble des éléments du réseau servant à la communication, soit les unités centrales électroniques, les modules, les connecteurs et le câblage.

Un premier objet de l'invention est un procédé d'évaluation de la qualité d'un réseau de communication embarqué sur un véhicule automobile comportant plusieurs modules électroniques qui sont reliés par un bus de communication et qui émettent chacun des signaux sous forme de trames composées d'une suite d'états binaires, caractérisé en ce qu'il comporte les étapes suivantes :
- mesure des temps de transition δTₘ entre les états binaires bas et haut d'une part, et δT_{d} entre les états binaires haut et bas d'autre part, sur chaque trame du signal circulant sur le bus du réseau, pour une différence de tension δV=V₂-V₁ constante, représentative de cette transition et fixée par les caractéristiques du bus, ladite mesure étant effectuée pour un ou plusieurs bits particuliers situés en dehors de la zone d'arbitrage de la trame;
- synchronisation du point de mesure sur le ou lesdits bits particuliers de chaque trame;
- identification de la trame sur laquelle est effectuée la mesure;
- affectation desdits temps de transition mesurés à une trame identifiant un module du réseau;
- recherche du temps de transition maximum pour une différence de tension δV donnée, respectivement pour les transitions de l'état bas vers l'état haut et pour les transitions de l'état haut vers l'état bas;
- comparaison dudit temps maximal mesuré à une valeur maximale prédéfinie δT_{MAX}.

Un autre objet de l'invention est un dispositif de mise en oeuvre du procédé d'évaluation, caractérisé en ce qu'il comporte:
- un circuit de mesure, recevant en entrée le signal circulant sur le bus et délivrant deux signaux logiques S₁ et S₂ de repérage des passages des fronts du signal par les tensions V₁ et V₂;
- un contrôleur du protocole recevant en entrée le signal circulant sur le bus, remis en forme selon des trames numérisées par une interface de communication;
- un circuit logique de séquencement recevant d'une part, du circuit de mesure, les signaux de repérage S₁ et S₂ et d'autre part, du contrôleur du protocole, un ordre de validation de la mesure en dehors de la zone d'arbitrage de la trame, et délivrant une fenêtre de comptage pour chacun des deux fronts montant et descendant, ainsi qu'un signal de fin de mesure;
- un compteur recevant du circuit de logique de séquencement, au début de la fenêtre de comptage, une remise à zéro et la validation de son horloge, et délivrant en sortie la valeur, en nombres binaires, du temps de transition entre les états binaires bas et haut du signal sur le bus déterminé par la largeur de la fenêtre de comptage;
- un micro-contrôleur recevant ledit signal de fin de mesure issu du circuit logique de séquencement et lisant d'une part la valeur, en nombres binaires, des temps de transition δTₘ et δT_{d} délivrée par le compteur et d'autre part l'identificateur de la trame correspondante, mémorisé par le contrôleur de protocole;
- un afficheur de la valeur des temps de transition δTₘ et δT_{d} et de l'identificateur de la trame correspondante, avec une période donnée.

D'autres caractéristiques et avantages de l'invention apparaîtront à la lecture de la description suivante de deux exemples particuliers de réalisation, cette description étant faite en relation avec les dessins joints dans lesquels, outre la figure 1 déjà décrite et représentant une trame physique du réseau:
- la figure 2ₐ représente un bit d'une trame émise par un module, dans le cas d'un bus monofilaire;
- la figure 2_{b} représente les signaux produits par la détection des fronts montant et descendant d'un tel bit;
- la figure 3ₐ représente un bit d'une trame émise par un module sur les deux fils d'un bus bifilaire;

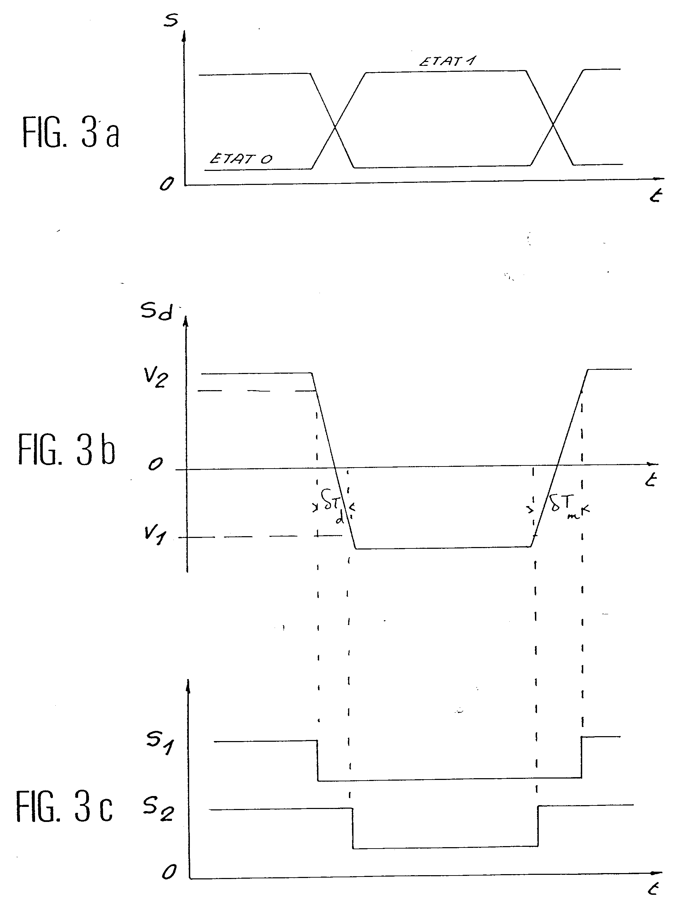

- la figure 3_{b} représente les signaux produits par la détection des fronts de ce bit;

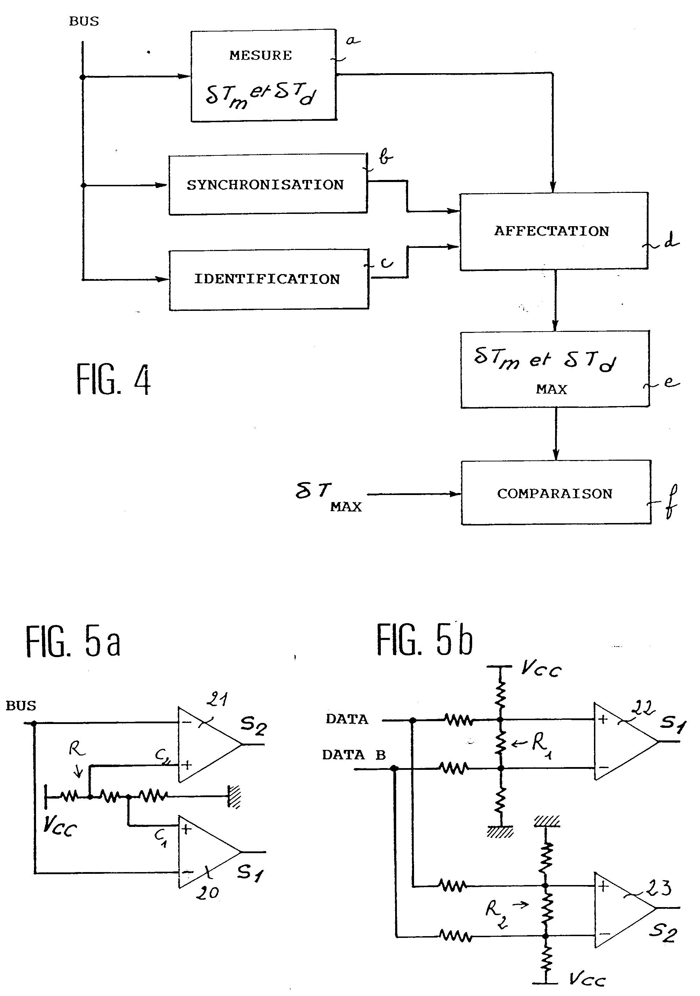

- la figure 4 est le synoptique du procédé selon l'invention;
- les figures 5ₐ et 5_{b} sont respectivement les schémas électroniques des moyens de mesure des temps de transition des fronts sur le réseau, dans le cas d'un bus monofilaire et dans le cas d'un bus bifilaire, selon l'invention;

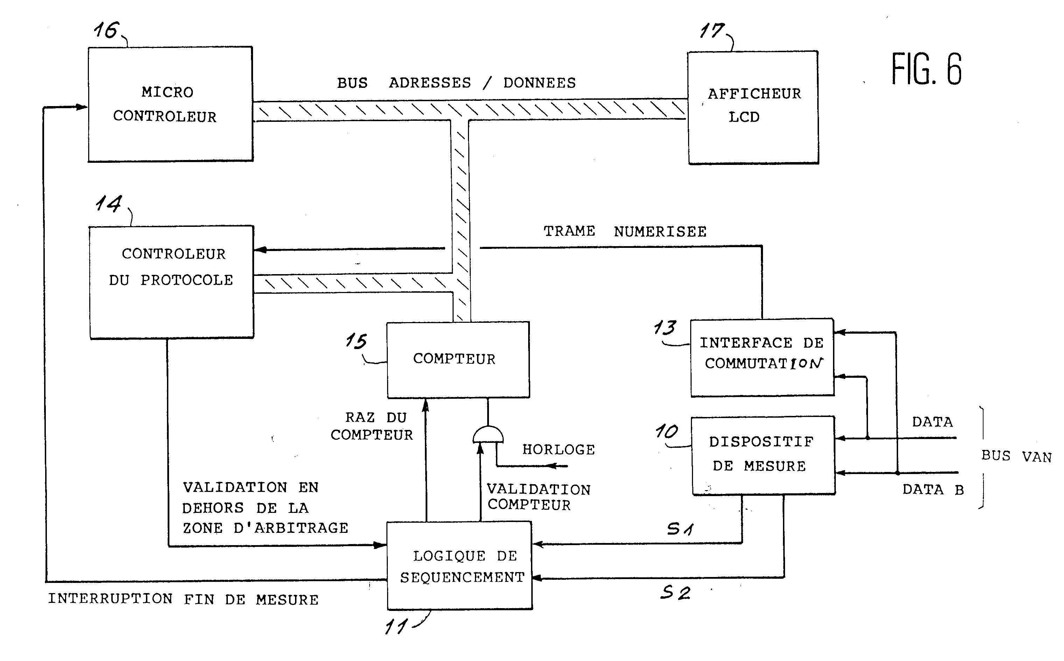

- la figure 6 est le schéma électronique du dispositif de mise en oeuvre du procédé selon l'invention.

Les éléments portant les mêmes références dans les différentes figures remplissent les mêmes fonctions en vue des mêmes résultats.

Selon l'invention, le procédé d'évaluation de la qualité d'un réseau de communication embarqué sur un véhicule automobile, comportant plusieurs modules électroniques reliés par un câble de communication, autrement appelé bus, et émettant un signal d'informations sous forme de trames, comporte une première étape de mesure des temps de transition δTₘ entre les états binaires bas (0) et haut (1) d'une part et δT_{d} entre les états binaires haut (1) et bas (0) d'autre part du signal circulant sur le bus du réseau, pour une différence de tension sur le signal δV=V₂-V₁ constante fixée par les caractéristiques du bus et représentative de la transition entre les états binaires. Cette mesure est effectuée sur chaque trame émise sur le bus de communication, de façon préférentielle pour un ou plusieurs bits particuliers situés en dehors de la zone d'arbitrage de la trame. Il est important que la mesure n'est pas lieu dans cette zone d'arbitrage où peuvent se produire des collisions, c'est-à-dire des émissions simultanées de bits récessifs et dominants.

La figure 2ₐ représente un bit d'une trame émise par un module, dans le cas d'un bus monofilaire. Les fronts montant et descendant du bit ne sont pas parfaitement verticaux et présentent un certain temps de transition δTₘ entre les états binaires 0 et 1 et δT_{d} entre les états binaires 1 et 0. En fonction des caractéristiques physiques du bus, on choisit de mesurer ces temps de transition entre deux valeurs V₁ et V₂ du signal circulant sur le bus, ces valeurs étant représentatives respectivement de l'état 0 et de l'état 1.

La figure 2_{b} représente les signaux logiques S₁ et S₂ produits par la détection du front montant et du front descendant d'un tel bit, entre les deux valeurs de tension V₁ et V₂. Ainsi le signal S₁, respectivement S₂, bascule de l'état 1 à l'état 0 quand le front montant du bit atteint la valeur de la tension V₁, respectivement V₂, ce qui permet de mesurer le temps de transition δT entre les états binaires 0 et 1 de la trame émise par un module donné, pour une différence de potentiel δV = V₂-V₁ constante. La même mesure est effectuée sur le front descendant du bit.

De la même façon, la figure 3ₐ représente un bit d'une trame émise par un module sur les deux fils d'un bus bifilaire. Dans ce cas, la mesure du temps de transition δTₘ et δT_{d} entre les états binaires s'effectue sur un signal différentiel S_{d}, résultant des deux signaux qui circulent sur les deux fils du bus en opposition de phase et représenté par la figure 3_{b}.

La figure 3_{c} représente les signaux S₁ et S₂ produits par la détection des fronts montant et descendant d'un tel signal, lors de leur passage par les tensions V₁ et V₂, fixées par les caractéristiques du bus bifilaire.

En même temps que l'étape a) de mesure, le procédé prévoit une étape b) de synchronisation du point de mesure ainsi qu'une étape c) d'identification de la trame dans laquelle a été effectuée la mesure. La synchronisation permet de situer le point de mesure sur un ou plusieurs bits de chaque trame en dehors de la zone d'arbitrage où plusieurs modules peuvent prendre le contrôle du réseau. Dans le cas d'un réseau de type VAN, le point est situé un octet après le champ de commande. L'identification de chaque trame est obtenue par mémorisation de la totalité de la trame, où apparaît son champ d'identification.

Ces trois étapes permettent d'affecter la mesure des temps de transition à un module donné par reconnaissance de l'identification, selon une quatrième étape d) comme le montre la figure 4, qui est le synoptique du procédé selon l'invention.

Le procédé comporte ensuite une cinquième étape e) de traitement des mesures des temps de transition consistant à rechercher le maximum du temps de transition pour une différence de potentiel δV constante, et une sixième étape f) de comparaison de ce maximum à la valeur nominale δT_{MAX} définie pour une configuration donnée du véhicule. Dans le cas où le maximum du temps de transition est supérieur à la valeur nominale, une étape de lecture des identificateurs de trame permet d'en déduire si le défaut constaté est propre à un module particulier ou à plusieurs. Puis on affiche sur un écran la valeur maximale de la mesure ainsi que l'identification du ou des modules.

Ainsi, si les transitions entre les états binaires 0 et 1, et entre 1 et 0, présentent une anomalie pour tous les modules du réseau, on en conclut que le réseau présente un défaut de câblage ou de connecteur. De même si la transition entre l'état 1 et l'état 0 est correcte alors que la transition inverse entre 0 et 1 présente une anomalie pour tous les modules, on en déduit qu'il y a un défaut de câblage ou de connecteur, ou bien qu'il s'agit d'une perte d'un ou plusieurs modules.

Par contre, si la transition entre les états 1 et 0 et/ou 0 et 1 est hors spécification pour un seul module, c'est ce module qui est défectueux.

Le mode de réalisation décrit en exemple concerne un réseau de type VAN, Vehicle Area Network, à titre non limitatif.

Un dispositif de mise en oeuvre du procédé selon l'invention comporte, comme le montre la figure 6, un circuit de mesure 10, recevant en entrée le signal circulant sur le bus et délivrant deux signaux logiques S₁ et S₂ de repérage des passages des fronts du signal par les tensions V₁ et V₂, qui aboutissent sur une première entrée d'un circuit logique de séquencement 11. Dans le cas d'un réseau comportant un bus monofilaire, le circuit de mesure 10 comprend, comme le montre la figure 5a, deux comparateurs 20 et 21, recevant chacun en entrée le signal circulant sur le bus et dotés chacun d'un seuil de commutation C₁, respectivement C₂, déterminé en fonction de la valeur des tensions V₁ et V₂ représentatives de la transition entre les états binaires bas et haut du signal et obtenu par un pont de résistances R relié à la tension d'alimentation V_{cc} du réseau. Lorsque le signal présente un front montant, le comparateur 20 commute d'un état haut à un état bas au moment où le signal passe par la valeur V₁ de la tension et le comparateur 21 commute à son tour d'un état haut à un état bas au moment où ce même signal passe par la valeur V₂.

Dans le cas d'un réseau comportant un bus bifilaire (figure 5_{b}), le circuit de mesure 10 comprend deux comparateurs 22 et 23, recevant chacun en entrée les deux signaux en opposition de phase circulant sur les deux fils du bus, et dotés chacun d'un seuil de commutation C₁', respectivement C₂', déterminé en fonction de la valeur des tensions V₁ et V₂ représentatives de la transition entre les états binaires du signal différentiel S_{d} résultant des deux signaux circulant sur le bus, lesdits seuils étant obtenus par deux ponts de résistances R₁ et R₂ reliés à la tension d'alimentation V_{cc} du réseau.

Le dispositif d'évaluation comporte également une interface de communication 13 destinée à remettre en forme le signal circulant sur le bus, selon des trames numérisées, avant de l'envoyer dans un contrôleur de protocole 14.

Ainsi, le circuit logique 11 reçoit d'une part les signaux S₁ et S₂ et d'autre part un signal de validation de la mesure en dehors de la zone d'arbitrage de la trame, envoyé par le contrôleur de protocole 14, et délivre en sortie une fenêtre de comptage pour chacun des deux fronts montant et descendant. Au début de cette fenêtre de comptage, le circuit logique de séquencement envoie, à un compteur 15, une remise à zéro et la validation de son horloge, afin que ce compteur délivre en sortie la valeur du temps de transition entre les états haut et bas du signal sur le bus du réseau, déterminé par la largeur de la fenêtre de comptage. A la fin de la fenêtre de comptage, le circuit logique de séquencement 11 envoie un signal de fin de mesure à un micro-contrôleur 16 qui va alors lire d'une part la valeur du temps de transition δTₘ ou δT_{d} délivrée par le compteur 15 et d'autre part l'identificateur de la trame correspondante, mémorisé par le contrôleur de protocole 14, avant de les afficher tous les deux avec une période donnée, d'une seconde par exemple.

L'opérateur compare ensuite la valeur maximale du temps de transition affichée avec la valeur maximale prédéfinie δT_{MAX}, pour une configuration donnée du véhicule, sur une table.

Le procédé et le dispositif selon l'invention constituent un nouvel outil de diagnostic du mauvais fonctionnement d'un réseau de communication embarqué sur un véhicule automobile. Cet outil se loge dans une mallette qu'un opérateur utilise en garage ou à l'usine. Intégrant tous les éléments du réseau servant à la communication, il permet de détecter le ou les éléments fonctionnant imparfaitement.

## Revendications

1. Procédé d'évaluation de la qualité d'un réseau de communication embarqué sur un véhicule automobile comportant plusieurs modules électroniques qui sont reliés par un câble de communication et qui émettent chacun des signaux sous forme de trames composées d'une suite d'états binaires, caractérisé en ce qu'il comporte les étapes suivantes :
- a) mesure des temps de transition δTₘ entre les états binaires bas (0) et haut (1) d'une part, et δT_{d} entre les états binaires haut (1) et bas (0) d'autre part, sur chaque trame du signal circulant sur le bus du réseau, pour une différence de tension δV=V₂-V₁ constante, représentative de cette transition entre les états binaires et fixée par les caractéristiques du bus, ladite mesure étant effectuée sur un ou plusieurs bits particuliers situés en dehors de la zone d'arbitrage de la trame;
- b) synchronisation du point de mesure sur le ou lesdits bits particuliers de chaque trame;
- c) identification de la trame sur laquelle est effectuée la mesure;
- d) affectation desdits temps de transition mesurés à une trame identifiant un module du réseau;
- e) recherche du temps de transition maximum pour une différence de tension δV donnée, pour les transitions de l'état bas vers l'état haut et pour les transitions de l'état haut vers l'état bas;
- f) comparaison dudit temps maximum mesuré à une valeur maximale δT_{MAX} prédéfinie pour une configuration donnée du véhicule.

2. Procédé d'évaluation selon la revendication 1, caractérisé en ce que la mesure du temps de transition δTₘ, respectivement δT_{d}, entre les états binaires bas et haut sur le front montant, respectivement entre les états binaires haut et bas sur le front descendant du signal circulant sur le bus, s'effectue par repérage des passages du front montant, respectivement descendant, par les tensions successives V₁ et V₂, respectivement V₂ et V₁, et par comptage de la durée séparant lesdits passages.

3. Dispositif de mise en oeuvre du procédé d'évaluation selon les revendications 1 et 2, caractérisé en ce qu'il comporte:
- un circuit de mesure (10), recevant en entrée le signal circulant sur le bus et délivrant deux signaux logiques S₁ et S₂ de repérage des passages des fronts du signal par les tensions V₁ et V₂;
- un contrôleur du protocole (14) recevant en entrée le signal circulant sur le bus, remis en forme selon des trames numérisées par une interface de communication (13);
- un circuit logique de séquencement (11) recevant d'une part, du circuit de mesure (10), les signaux de repérage S₁ et S₂ et d'autre part, du contrôleur du protocole (14), un ordre de validation de la mesure en dehors de la zone d'arbitrage de la trame, et délivrant une fenêtre de comptage pour chacun des deux fronts montant et descendant, et un signal de fin de mesure;
- un compteur (15) recevant du circuit de logique de séquencement (11), au début de la fenêtre de comptage, une remise à zéro et la validation de son horloge, et délivrant en sortie la valeur, en nombres binaires, du temps de transition entre les états binaires bas et haut du signal sur le bus déterminé par la largeur de la fenêtre de comptage;
- un micro-contrôleur (16) recevant ledit signal de fin de mesure issu du circuit logique de séquencement (11) et lisant d'une part la valeur des temps de transition δTₘ et δT_{d} délivrée par le compteur (15) et d'autre part l'identificateur de la trame correspondante, mémorisé par le contrôleur de protocole (14);
- un afficheur (17) de la valeur des temps de transition δTₘ et δT_{d} et de l'identificateur de la trame correspondante, avec une période donnée.

4. Dispositif d'évaluation selon la revendication 3, caractérisé en ce que, dans le cas d'un réseau comportant un bus monofilaire, le circuit de mesure (10) comprend deux comparateurs (20 et 21), recevant chacun en entrée le signal circulant sur le bus et dotés chacun d'un seuil de commutation (C₁ et C₂) déterminé en fonction de la valeur des tensions V₁ et V₂ représentatives de la transition entre les états binaires bas et haut du signal.

5. Dispositif d'évaluation selon la revendication 3, caractérisé en ce que, dans le cas d'un réseau comportant un bus bifilaire, le circuit de mesure (10) comprend deux comparateurs (22 et 23), recevant chacun en entrée les deux signaux en opposition de phase circulant sur les deux fils du bus, et dotés chacun d'un seuil de commutation (C₁' et C₂') déterminé en fonction de la valeur des tensions V₁ et V₂ représentatives de la transition entre les états binaires du signal différentiel S_{d} résultant des deux signaux circulant sur le bus.
